# EUROPEAN PATENT SPECIFICATION

(11) **EP 4 476 584 B1**
(45) Date of publication and mention of the grant of the patent: **14.10.2026**
(21) Application number: 23724786.1
(22) Date of filing: 04.05.2023
(51) Int. Cl.: G02B 27/01, G02B 21/22

(54) **STEREOSCOPIC, INDIRECT VIEWING DEVICE FOR A MICROSCOPE**
STEREOSKOPISCHE, INDIREKTE BETRACHTUNGSEINRICHTUNG FÜR EIN MIKROSKOP
DISPOSITIF DE VISUALISATION INDIRECTE STÉRÉOSCOPIQUE POUR MICROSCOPE

(30) Priority: 05.05.2022 WO PCT/EP2022/062224
(43) Date of publication of application: 18.12.2024
(73) Proprietor: Haag-Streit GmbH, 68167 Mannheim (DE)
(72) Inventor: TRENSCHEL, Tobias, 68163 Mannheim (DE); STALDER, Peter, 3510 Konolfingen (CH)
(74) Representative: E. Blum & Co. AG
(86) International application number: PCT/EP2023/061794
(87) International publication number: WO 2023/213938

(56) References cited:
- WO-A1-2016/154589
- WO-A2-2017/192996
- CN-A- 106 371 214
- DE-A1- 19 814 731
- JP-A- 2001 013 448
- US-A1- 2004 196 553
- US-A1- 2004 263 613
- US-A1- 2010 013 910
- US-A1- 2010 053 741
- US-A1- 2011 080 536
- US-A1- 2019 146 220

## Description

### Technical Field

The invention relates to a stereoscopic, indirect viewing device for a microscope as well as to a microscope comprising such a viewing device.

In this context, an "indirect" viewing device is a viewing device that does not directly transmit light originating from the object being viewed to the binocular. Rather, it only transmits light from displays that display the image of the object as seen by cameras of the microscope. In other words, the macroscopic imaging system of the microscope does not cast light into the viewing device. Rather, the light from the object is cast onto cameras, from where it is electronically transmitted to the displays of the viewing device.

The viewing device is stereoscopic in the sense that it has a left and a right viewing channel and is adapted to project independent left and right images into the left and right eyes of the observer in order to generate a stereoscopic, three-dimensional viewing experience.

### Background Art

Stereoscopic viewing devices for microscopes have been known to include displays.

In direct viewing devices, the displays are used to superimpose, in each viewing channel, a display image over the direct light coming from the object being viewed. In order to avoid an obstruction of the direct light, a semi-transparent mirror is arranged in each viewing channel in order to superimpose the direct light and the display image.

Indirect viewing devices for microscopes do not have direct object light in the viewing channels. Hence, the displays can be arranged in the viewing channels directly, and no semi-transparent mirrors are required.

US20040263613A1 describes a viewing device for an endoscope, and WO2016154589A1 describes a viewing device for a microscope. Both are stereoscopic with mirrors in each viewing channel.

### Disclosure of the Invention

The problem to be solved by the present invention is provide a simple viewing device and microscope of the type above with good viewing experience for the user.

This problem is solved by the viewing device and microscope of the independent claims.

Hence, the stereoscopic indirect viewing device for a microscope has a left and a right viewing channel for generating left and right images to be projected into the left and right eye of a user.

If further comprises:
- A left display arranged in the left viewing channel and right display arranged in the right viewing channel: The two displays generate display images to be transmitted through their respective viewing channels.
- A left ocular in the left viewing channel and a right ocular in the right viewing channel: The oculars are adapted to project, in cooperation with the user's eye lenses, the display images on the displays onto the retina of the left and the right eye of the user.
- A left beam deflector arranged between the left ocular and the left display in the left viewing channel and a right beam deflector arranged between the right ocular and the right display in the right viewing channel. In this context, a beam deflector is a device deflecting the optical axis of the viewing channel by a non-zero angle. In other words, a lens is not a beam deflector in the sense used here. In particular, the beam deflector comprises at least a mirror and/or a prism.

Using, in both channels, a beam deflector between the ocular and the display, provides additional freedom in placing the displays, which are two separate, individually mountable displays, e.g. in different, non-parallel planes and/or at a larger distance from each other in the same plane.

Thus, the beam deflectors provide more room for the displays and their associated components. This e.g. allows using larger displays having a large number of pixels and/or increasing the user's field of view and/or using larger mechanical frames or connectors for mounting and connecting the displays. It also allows to design a more compact viewing device along the user's viewing direction.

Advantageously, the device comprises the left as well as the right beam deflector, i.e. beam deflectors are arranged in both viewing channels. However, alternatively, a non-symmetrical design can be used with a beam deflector in only one of the two viewing channels while the other viewing channel does not comprise a beam deflector.

Advantageously, one or both viewing channels has or have at least a first section and a second section, with the first section located between the ocular and the beam deflector and the second section located between the beam deflector and the display.

The beam deflector deflects the first section into the second section (and vice versa). Hence, for at least one channel, the optical axis of the first section is non-parallel to the optical axis of the second section. In this context, the optical axis is defined as the central axis of the viewing channel that connects the center of the ocular with the center of the display. It usually is the shortest path that a photon can take from the center of the display to the center of the ocular.

In the following, we define a "left vector" and a "right vector" as follows and assume that there are beam deflectors in both channels:
- The left vector extends along the optical axis in the second section of left viewing channel from the left beam deflector towards the left display; and
- The right vector extends along the optical axis in the second section of right viewing channel from the right beam deflector towards the right display.

In this case, advantageously, these vectors are non-parallel.

This allows to easily place the left and right display at a larger distance from each other.

In particular, the angle between the two vectors is larger than 45°, in particular larger than 90°, in particular larger than 135°, in particular 180°.

Advantageously, the left and right vectors are divergent. By definition, they are divergent if,
when placing the start of the left vector at the intersection of the viewing axis with the left beam deflector and the start of the right vector at the intersection of the viewing axis with the right beam deflector,
then the distance between the starts of left and the right vectors is smaller than the distance between the ends of the left and right vectors for any lengths of the left and right vector as long as the lengths of the left and right vector are equal.

Such divergent left and right vectors direct the viewing direction "outwards", which allows to mount the displays at outer regions of the viewing device, thereby allowing for a compact design while still providing enough room for the two displays.

In one embodiment, the optical axis of the first section of the left viewing channel is parallel to the optical axis of the first section of the right viewing channel. This is a design where the user's gaze is directed into infinity while viewing the images.

In another embodiment, the optical axis of the first section of the left viewing channel and the optical axis of the first section of the right viewing channel are convergent. In this case, the user's gaze is "crossed" to view an object at a finite distance.

In one embodiment, the oculars are chosen such that the normal-sighted user can view the images of the displays sharply by adapting the lenses of his/her eyes to infinity. In this case, for each channel, the focal length of the ocular is equal to the optical distance between the ocular and the display of the channel.

In another embodiments, the oculars are chosen such that the normal-sighted user can view the images of the displays sharply by adapting the lenses of his/her eyes to a distances shorter than infinity. In this case, for each channel, the focal length of the ocular is larger than the optical distance between the ocular and the display of the channel. This second embodiment is particularly useful when being combined with a geometry where the optical axis of the first section of the left channel and the optical axis of the first section of the right channel are convergent.

In each channel, there may be a corrective concave lens arranged between the beam deflector and the display. This yields improved sharpness of the image over the whole display.

In a simple embodiment, the deflectors are flat mirrors.

In an alternative embodiment, though, the deflectors may have curved surfaces, which may e.g. be used to take over at least part of the function of the corrective lens mentioned above.

Advantageously, the left and the right display are not coplanar, i.e. they do not lie in the same plane, which provides more room for the displays in a compact design.

In particular, the angle between the displays is less than 90°, in particular less than 45°, in particular less than 10°. In this context, the "angle" between the displays is the angle between their pixel planes (i.e. the planes where the pixels of the displays are located in).

Advantageously, in order to provide exactly the same visuals to the left and right eye, the left and right channels are symmetric to each other. The symmetry may be a mirror symmetry (where one channel is mapped into the other by mirroring on a flat symmetry plane) and/or a rotational symmetry (wherein one channel is mapped into the other channel by rotating about a symmetry axis).

In order to adjust the device to the pupillary distance of the user, the device comprises a left mount and a right mount, with the left viewing channel (i.e. the left ocular, the left beam deflector, and the left display) being mounted on the left mount and the right viewing channel (i.e. the right ocular, the right beam deflector, and the right display) being mounted on the right mount. The left and the right mounts are mutually displaceable to adjust the channels to the pupillary distance.

The invention also relates to a stereo microscope comprising a viewing device of this type as well as the following components:
- Microscope optics having a left and a right microscope channel: This optics are adapted to take a stereoscopic image of an object.
- A first camera arranged in a first one of the microscope channels and a second camera arranged in a second one of the microscope channels: The cameras are adapted to record images from the left and the right microscope channel.
- First and second electronic signal transmission channels: These channels connect the first camera to the left display and the second camera to the right display in order to replay the images on the displays. Depending on applications, the first camera may be arranged in the left channel and the second camera in the right channel, or (if left and right are to be switched) the first camera may be arranged in the right channel and the second camera in the left channel.

The microscope of the present invention is advantageously an ophthalmic microscope and/or a surgical microscope.

### Brief Description of the Drawings

The invention will be better understood and objects other than those set forth above will become apparent when consideration is given to the following detailed description thereof. Such description makes reference to the annexed drawings, wherein:
Fig. 1 shows a stereo microscope with a viewing device,
Fig. 2 shows a schematic view of a viewing device,
Fig. 3 is a top view of the two viewing channels of a first embodiment of the viewing device,
Fig. 4 is a schematic top view of the two viewing channels of a second embodiment, with the elements of the left viewing channel shown in dotted lines,
Fig. 5 is a side view of the viewing device of Fig. 4, again with the elements of the left viewing channel shown in dotted lines,
Fig. 6 is a top view of a third embodiment of the viewing device,
Fig. 7 illustrates a prior art situation of a user watching a 55" screen from a distance of 1.2 m,
Fig. 8 shows a top view of a fourth embodiment of the viewing device,
Fig. 9 shows a top view of a fifth embodiment of the viewing device,
Fig. 10 shows a top view of a sixth embodiment of the viewing device, and
Fig. 11 shows a top view of a seventh embodiment of the viewing device.

### Modes for Carrying Out the Invention

### Definitions

The "optical distance" in a viewing channel is the distance measured between two objects along the optical axis of the viewing channel. For example, the optical distance between the ocular and the display is the sum of the distance from the center of the ocular to intersection of the optical axis with the deflector and from there to the center of the display. If the path crosses a solid, the path length is multiplied with the refractive index of the solid.

In the present context, the term "ocular" refers to user-facing imaging optics that cooperate with the user's eye lens and, optionally, further optical elements to image the display (i.e. the object) onto the user's retina. In contrast to a sometimes-used definition of "ocular", the term as used herein does not imply that there is an intermediate image plane between the "object" (i.e. the display) and the ocular. Rather, the components of the device are advantageously adapted such that imaging takes place from the displays onto the retina without the formation of such an intermediate image.

### Stereo Microscope

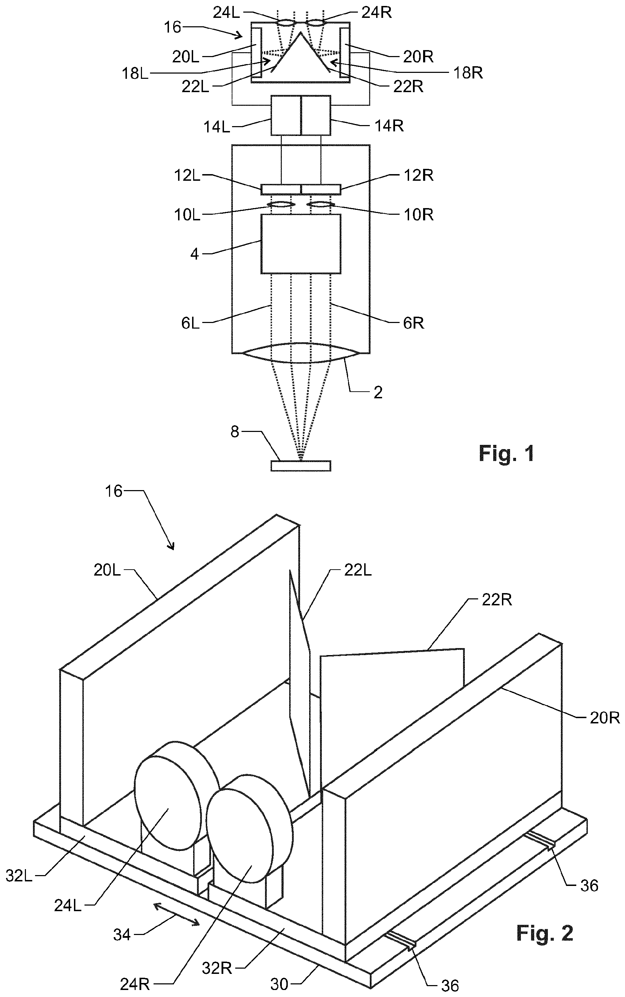

Fig. 1 shows an embodiment of a stereo microscope having e.g. an objective lens 2 and zoom optics 4 for processing left and a right microscope channels 6L, 6R of an object 8. The image information is then fed through left and a right camera optics 10L, 10R and imaged onto a left and right cameras 12L, 12R.

Various embodiments of such camera-equipped microscopes are known to the skilled person. They may e.g. comprise additional optics, such as filters, illumination optics, oculars, etc. In the present context, what matters is that the stereo microscope is able to record electronic images from the stereoscopic microscope channels 6L and 6R.

The cameras 12L and 12R are advantageously high-resolution cameras having a resolution of at least 3.5 Mpixel, in particular of at least 8.2 Mpixel, in order to generate realistic, high-resolution images.

The image signals from the cameras are fed through left and right electronic signal transmission channels 14L, 14R.

In the transmission channels 14L, 14R, the images may optionally be processed, e.g. by image processing techniques (such as filtering, contrast enhancement, noise reduction, mirroring, digital zoom, image analysis, etc.).

In addition or alternatively thereto, the images may be overlaid with additional information, such as with markers highlighting positions in the image and/or with textual or symbolic information to be displayed to the user. Such overlaid information may be added to the left or the right channel only, or to both of them. When overlaying the information on both channels, it may be placed in different positions in the coordinate systems of the two channels for generating a stereoscopic effect, i.e. to provide depth information to the user.

The signal transmission channels 14L, 14R are typically implemented by computing hardware, such as a suitably programmed microprocessor and/or GPU and/or neuronal network.

The optionally processed images are then fed to a viewing device 16.

Viewing device 16 has a left and a right viewing channel 18L, 18R, each one equipped with a display 20L, 20R, a beam deflector 22L, 22R, and an ocular 24L, 24R.

In at least one operating mode, the signal transmission channels 14L, 14R connect left camera 12L to left display 20L and right camera 12R to right display 20R such that the left display 20L displays a (optionally processed) image from left microscope channel 6L and right display 20L displays a (optionally processed) image from right microscope channel 6R. Thus, a user looking into viewing device 16 through the oculars 24L, 24R obtains a stereographic view of object 8. The roles of the left and right cameras may be switched permanently or temporarily when the viewing channels have to be swapped, e.g. when using an ophthalmoscopy lens between the microscope objective and the patient's eye for viewing the retina.

In the following, viewing device 16 is described in more detail.

### Viewing Device

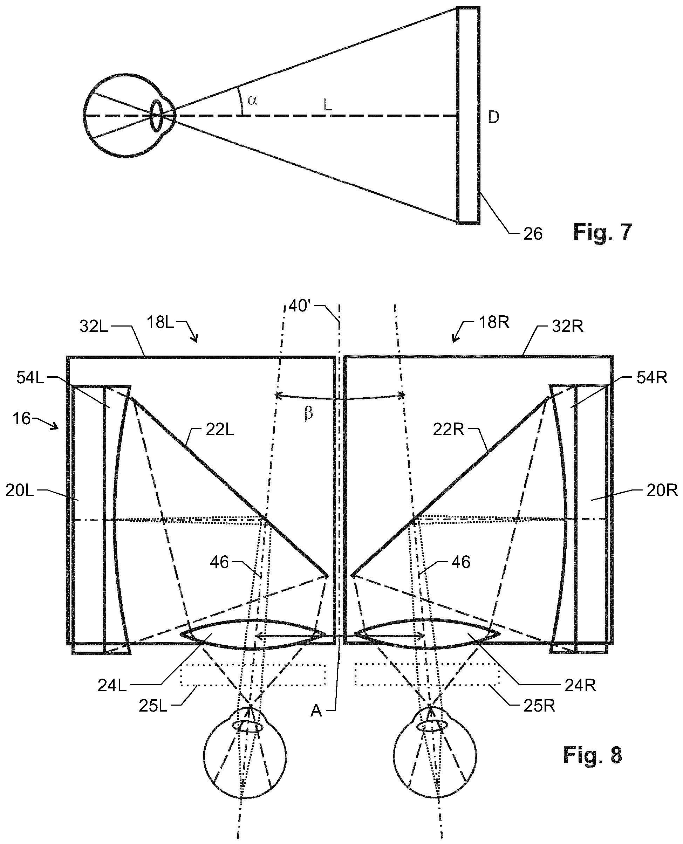

Viewing device 16 is optimized to offer a highly realistic viewing experience to the user. It should provide an experience at least similar to viewing a stereoscopic 55" (140 cm) screen 26 from a distance of 1.2 m, as depicted in Fig. 7. Hence, the half-angle aperture α of the user's field-of-view should advantageously be at least 15°.

Hence, in the viewing device, the condition D/2L > tan(15°) should advantageously apply, with L being the distance between the ocular and the display and D being the smallest diameter of the display.

For a 16:9 aspect-ratio display, the field-of-view should advantageously have a full-angle field-of-view of at least 30° x 50°.

Also, the system should have a large, advantageously infinite, entrance pupil, providing a good view of the display even if the user moves his head left and right or up and down by some mm.

In addition, the individual pixels should be more or less invisible for the user, i.e. the angular resolution of the pixels, from the eye's view, should be around 1 arc minute or better. For example, using a 2.5k display with a 2.5k resolution (1440 x 2560 pixels) positioned to give a full-angle viewing field-of-view of 32° x 54° has an acceptable angular pixel resolution of 1.36 arc minutes, and a 4k at the same field-of-view provides a good angular pixel resolution of 0.91 arc minutes.

Hence, the displays 20L, 20R of viewing device 16 advantageously have a resolution of at least 3.5 Mpixel, in particular of at least 8.2 Mpixel.

Further, the displays 20L, 20R should be mounted close enough to the oculars 24L, 24R to provide a large field-of-view.

In addition, the displays are advantageously color displays.

Suitable displays are readily available with screen diagonals of e.g. 5.5" (14 cm). In another embodiment, high-resolution micro-OLED displays can be used, which may have similar resolutions with diagonals of e.g. only 2.5 cm.

Viewing device 16 is designed to have a large field-of-view and to use displays meeting the desired standards of quality.

In order to implement this, viewing device 16 is provided with beam deflectors as outlined in the section "Disclosure of the Invention" above.

In the following, some advantageous embodiments of such viewing devices are described.

### First Embodiment

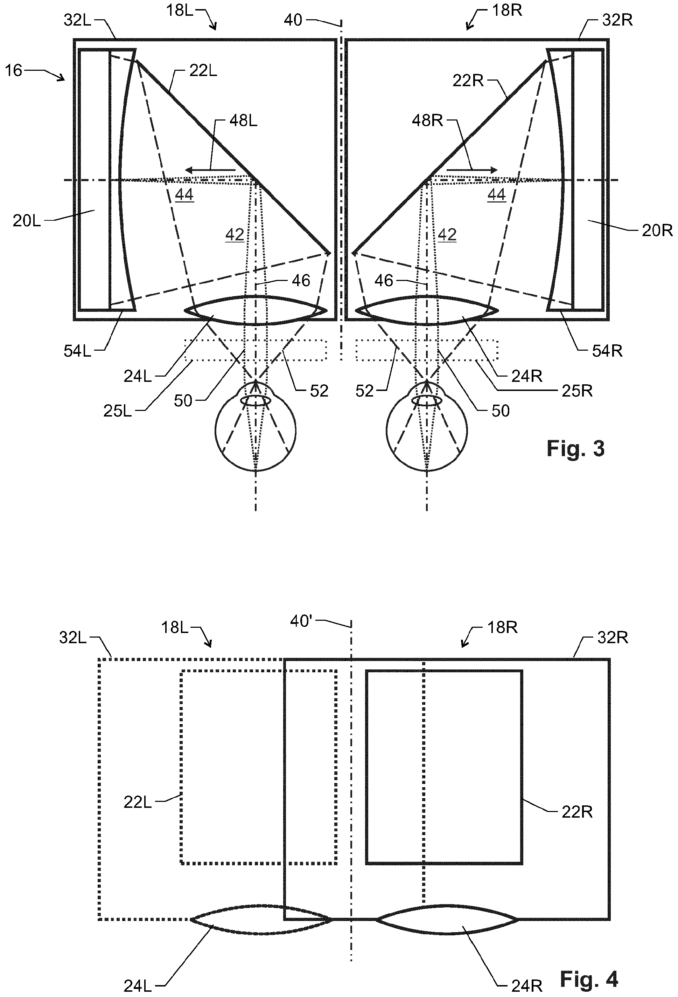

Figs. 2 and 3 show a schematic 3D view as well as a top view of a first embodiment of the viewing device.

Fig. 2 shows the mechanical setup of the device. As can be seen, it e.g. comprises a base 30, a left mount 32L, and a right mount 32R. Left mount 32L carries the components of left viewing channel 18L, and right mount 32R carries the components of right viewing channel 18R. Left mount 32L and right mount 32R are mutually displaceable along a direction 34, which extends perpendicular to a symmetry plane of the left and right oculars 24L, 24R, with said symmetry plane being located between the left and right oculars 24L, 24R.

In the shown embodiment, the device comprises one or more guide rails 36 extending along direction 34, with at least one of the mounts 32L, 32R being mounted thereto. An adjustment screw or other adjustment drive may be provided to adjust the distance between the left and right mounts 32L, 32R. As mentioned above, this allows adjusting the device to the pupillary distance of the user.

Advantageously, the left and right viewing channels 18L, 18R are symmetric to each other, i.e. they can be mapped onto each other by rotation or mirroring operation. This symmetric design provides for identical viewing experience in both channels.

In the embodiment e.g. shown in Figs. 2 and 3, the left and right viewing channels 18L, 18R are symmetric to a mirror plane 40 (see Fig. 3), which is located between the left and right ocular 24L, 24R.

In the following, the optics of the viewing channels are described in more detail with reference to Fig. 3.

Each viewing channel 18L, 18R has a first section 42 and a second section 44. The first section 42 is located between the ocular 24L, 24R and the beam deflector 22L, 22R, and the second section 44 is located between the beam deflector 22L, 22R and the display 20L, 20R.

Fig. 3 also shows, in dash-dotted lines, the optical axis 46 of the viewing channels 18L, 18R. This optical axis 46 connects the center of ocular 24L, 24R with the center of display 20L, 20R via beam deflector 22L, 22R.

In the embodiment of Fig. 3, the optical axis 46 is, in the first section 42, non-parallel to the optical axis 46 in the second section 44 because it is deflected by beam deflector 22L, 22R.

On the other hand, in the shown embodiment, optical axis 46 in the first section 42 of left channel 18L is parallel to optical axis 46 in the first section 42 of right channel 18R. Hence, as described above, the user's gaze is directed into infinity while viewing the images on the displays 20L, 20R.

Fig. 3 also depicts a "left vector" 48L and a "right vector" 48R. Left vector 48L extends along optical axis 46 in second section 44 of left viewing channel 18L from left beam deflector 22L towards left display 20L. Right vector 48R extends along optical axis 46 in second section 44 of right viewing channel 18R from right beam deflector 22R towards right display 20R.

In the embodiment of Figs. 2 and 3, where the beam deflectors 22L, 22R both direct the user's gaze outwards, the left and the right vectors 48L, 48R are non-parallel. In particular, they are advantageously divergent for the reasons explained above.

In the shown embodiment, the beam deflectors 22L, 22R are under
a mutual angle of 90° and deflect the optical axis 46 outwards (i.e. perpendicularly away from symmetry plane 40) by 90°, therefore the left and right vectors 48L, 48R are anti-parallel, i.e. the angle between them is 180°.

In an embodiment where each viewing channel 18L, 18R has one beam deflector 22L, 22R only, and the left and right vectors 48L, 48R are anti-parallel, the displays 20L and 20R are parallel and facing each other. The angle between the displays is 0°.

Other configurations are described below.

In the shown embodiment, as depicted by the dotted lines 50, the user has their gaze focused on infinity. Hence, in order to provide a sharp image of the image on the displays 20L, 20R, the focal length of ocular 24L, 24R is equal to the optical distance between the ocular and the display 20L, 20R of its channel.

Fig. 3 also shows the wide field-of-view of the device by means of dashed lines 52.

This wide field-of-view, with a half-angle aperture of at least 15°, as mentioned above, may lead to poor focusing over the whole area of display 20L, 20R. Since the pixels of each display 20L, 20R lie in a plane, the distance between ocular 24L, 24R and the pixels is different for the center and the periphery of display 20L, 20R.

To compensate for this and to provide a sharp image in all part of the display, the device may comprise, in each viewing channel 18L, 18R, a corrective concave lens 54L, 54R arranged between beam deflector 22L, 22R and display 20L, 20R.

Advantageously, in order to provide a compact design, the corrective concave lens 54L, 54R is a plano-concave lens with its flat surface facing the display 20L, 20R. The distance between the flat surface of corrective lens 54L, 54R and the display is advantageously substantially zero, i.e. corrective lens 54L, 54R abuts against the display. A small gap between the corrective lens 54L, 54R and its display 20L, 20R may exist. However, the distance between the flat surface and the display is advantageously less than 1 cm.

Since corrective lens 54L, 54R is close to the display, it may be of a comparatively low-quality optical material, i.e. a material having comparatively high dispersion and/or low surface quality, such as a cast polymer.

Corrective lens 54L, 54R advantageously covers substantially all of the display, i.e. the area of corrective lens 54L, 54R is at least equal to the area of the display 20L, 20R. Alternatively, the corrective lenses may also only cover part of their respective display.

Ocular 24L, 24R directly projects the image on display 20L, 20R into the user's eye, i.e. it forms no intermediate image, which helps in providing a large field-of-view with substantially no limitation caused by an entry pupil aperture.

Ocular 24L, 24R may be a single lens or, as known to the skilled person, a combination of several lenses for improved imaging quality.

In the embodiment of Fig. 3, the beam deflectors 22L, 22R are flat mirrors with substantially 100% reflectivity over the whole visible spectral range. They may, for example, be metallic mirrors.

The embodiment of Fig. 3 also shows optional corrective optics 25L, 25R for correcting myopia or hyperopia. These may e.g. include tunable lenses, such as fluid lenses, Alvarez lenses or adjustable lens pairs, or a selection of fixed lenses to be optionally inserted into the viewing path.

Advantageously, for a compact, simple design with a wide field-of-view, the beam deflectors are flat mirrors. The angle between the mirrors is advantageously 90° ± 10°.

### Second Embodiment

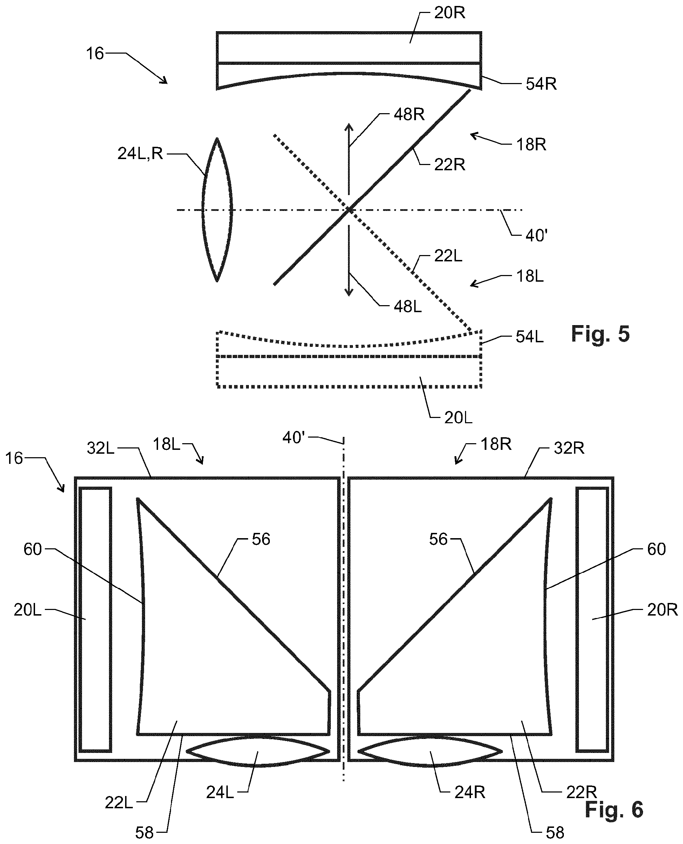

Figs. 4 and 5 show a second embodiment of the viewing device, with the elements of the left viewing channel depicted in dotted lines and the elements of the right viewing channel depicted in solid lines. Fig. 4 shows the device from above, Fig. 5 from the side.

Here, display 20R of right viewing channel 18R is located at the top of the viewing device and display 20L of left viewing channel 18L is located at its bottom. This is achieved by aligning the beam deflectors 22R, 22L to direct the left vector 48L downwards and the right vector 48R upwards. In the shown embodiment, these two vectors 48L, 48R are anti-parallel.

The two viewing channels 18L, 18R are still symmetrical to each other, but in this case, the symmetry is a rotational symmetry about a symmetry axis 40°.

### Third Embodiment

Fig. 6 shows a third embodiment of a viewing device. It illustrates the use of prisms 22L, 22R as beam deflectors. As known to the skilled person, these prisms have a surface 56 acting as a mirror surface and being aligned to provide total internal reflection within the prism.

One or both of the entry and/or exit surfaces 58, 60 of the prisms, and or the reflecting surface 56 may be curved to assist the imaging in the respective viewing channel 18L, 18R. In the show embodiment, the exit surface 60 is concave and replaces part or all of the function of corrective lens 54L, 54L of the previous embodiments.

### Fourth Embodiment

Fig. 8 shows a fourth embodiment of the viewing device 16. This embodiment is optimized to give the viewer the impression that the object being viewed is at a finite distance. Therefore, the optical axis 46 in the first section 42 of left channel 18L and the optical axis 46 in the first section 42 of the right channel 18R are convergent in the sense above, i.e. the user has to eye the object with vergence (i.e. with slightly "crossed" eyes).

In addition, the focal length of the oculars 24L, 24R is larger than the optical distance between the oculars 24L, 24R and the respective displays 20L, 20R. Hence, in order to see the images of the displays 20L, 20R clearly, the user has to focus to a finite focal distance.

Advantageously, the vergence, i.e. the angle between the axes 46 of the left and right viewing channel 18L, 18R and the viewer's subjective focal distance match.

More specifically, if we assume β to be the angle between the optical axis 46 in the first section 42 of left channel 18L and the optical axis 46 in the first section 42 of the right channel 18R, and A to be the distance between the centers of the oculars 24L, 24R, the vergence distance X corresponding to the user's vergence is given by $X = A / \left(2⋅tan\left(β/2\right)\right) .$ (1)

Distance X is the distance between the plane of the oculars 24L, 24R (along a direction perpendicular to this plane, i.e. along line 40' of Fig. 8) and the point of intersection of the optical axes 46 of the first sections 42.

This viewing distance corresponding to the vergence should substantially correspond to the viewer's subjective focal distance, e.g. within an accuracy of ±33%. If we assume that the user's eye is very close to the ocular and the distance between the eye and the ocular can be ignored, this correspondence is achieved if $1 / X + 1 / L = 1 / f ,$ (2) with L being the optical distance in the viewing channel 18L, 18R from the ocular 24L, 24R to the display 20L, 20R and f being the focal lens of the ocular.

(If the distance between the eye and the ocular cannot be ignored, a correction has to be added to Eq. (2). The required techniques for calculating this are known to the skilled person.)

Hence, in general, if the viewing device should be optimized for a finite subjective focal length equal to X, i.e. giving the user the impression that (s)he is focusing the lens of their eye to a finite distance X, the focal length f of ocular 24L, 24R should be larger (in particular by at least 10%, in particular by at least 10%) than the optical distance L between the ocular 24L, 24R and display 20L, 20R of the respective channel.

In the simplified context of Eqs. (1) and (2), the desired equality of the vergence distance and the subjective focal length is met if $1 / f = 1 / L + 2 ⋅ tan \left(β/2\right) / A .$ (3)

In more general terms, if the distance between the eye and the ocular cannot be neglected, Eq. (3) is considered to be met if the user sees the image clearly when focusing at the vergence distance X.

In other words, the focal length f of the oculars 24L, 24R is advantageously such that the (normal-sighted) user sees the image on the displays clearly when her/his eyes have a focal length matching the vergence distance X.

Advantageously, the vergence distance X is a typical working distance for an ophthalmologist or surgeon. In particular, X lies in a range of 0.4 to 3 m.

It must be noted that the beam deflectors 22L, 22R are particularly important for a viewing device in which the optical axis 46 in the first section 42 of left channel 18L and the optical axis 46 in the first section 42 of the right channel 18R are convergent. In this case, without the beam deflectors 22L, 22R, the displays would have to be placed very close together, which would make it hard and/or expensive to use displays of high resolution even if e.g. micro OLED displays were used.

### Fifth Embodiment

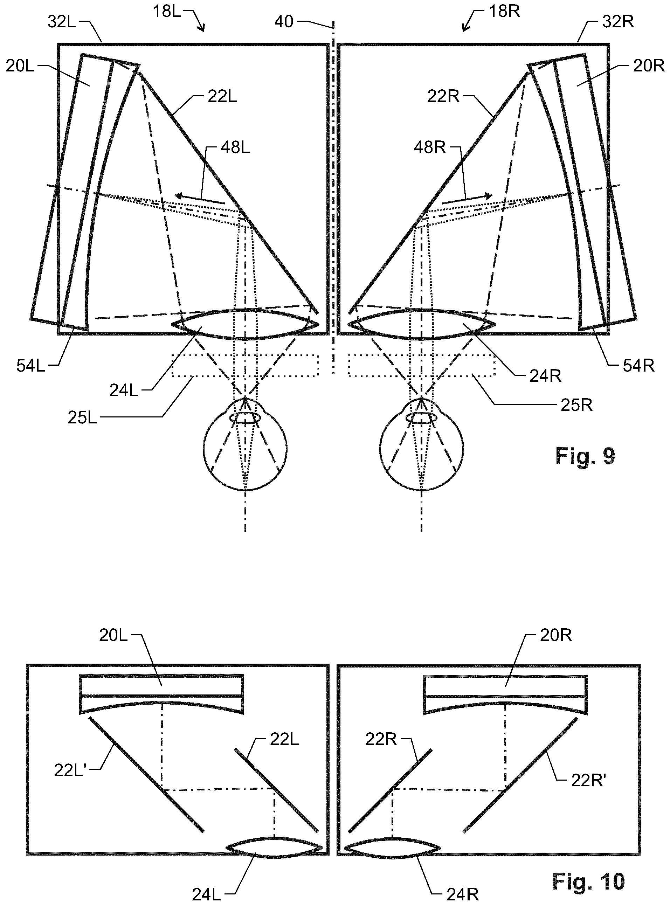

Fig. 9 shows yet another embodiment, which illustrates that the left and right vectors 48L, 48R need not be anti-parallel or parallel if the displays 20L, 20R and the beam deflectors 22L, 22R are suitable tilted.

### Sixth Embodiment

Fig. 10 shows a sixth embodiment illustrating that there may be more than one beam deflector per viewing channel, such as the beam deflectors 22L, 22L' in left viewing channel 18L and the beam deflectors 22R, 22R' in right viewing channel 18R as shown, in which case the two displays 20L, 20R may even be co-planar.

However, this embodiment requires additional components and makes it harder to achieve the desired large field-of-view.

Hence, advantageously, there is only a single beam deflector in each viewing channel.

### Seventh Embodiment

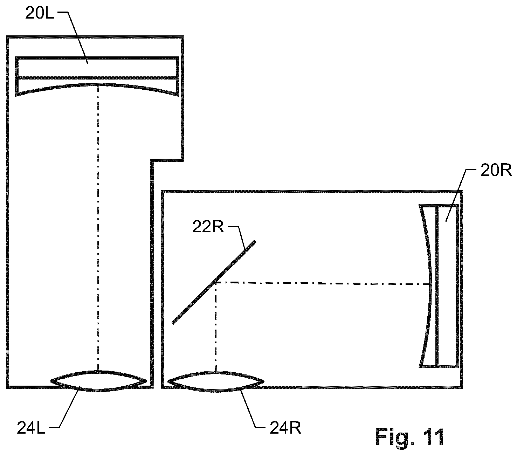

Fig. 11 shows a seventh embodiment illustrating that there may be a beam deflector in only one of the two viewing channels, while the other viewing channel may have a straight viewing axis. This allows to reduce the number of optical components while still retaining the option of a large spatial separation between the displays 20L, 20R.

### Notes

In the embodiments above, each beam deflector 22L, 22R provides a flat mirroring surface. However, this surface may also be curved in order to support the imaging function of its viewing channel 18L, 18R.

As a summary, the stereoscopic viewing device described here is an indirect viewing device, i.e. a device that only transmits images from displays but no direct light from the object being viewed. It has two viewing channels 18L, 18R, each with a display 20L, 20R, a beam deflector 22L, 22R, and an ocular 24L, 24R. The oculars 24L, 24R project the displays 20L, 20R into the user's eyes, advantageously without forming an intermediate image. The device allows using high-resolution displays 20L, 20R and provides a wide field-of-view. The beam deflectors 22L, 22R allow to place the displays apart, thereby providing more room of the displays themselves but also for their connectors and mounts. In addition or alternatively thereto, the beam deflectors 22L, 22R allow to make the viewing device shorter along the viewing direction of the user.

In order to allow for head movements of the user, a wide field-of-view, and for a comfortable viewing experience, the diameters of the entrance pupils of the oculars are advantageously at least 3 cm, e.g. 5 cm.

As it follows from the figures, the present device is advantageously not a head-mounted device. Rather, it forms part of the microscope system and is therefore mounted to the stand of the microscope, e.g. just like a classical ocular.

While there are shown and described presently preferred embodiments of the invention, it is to be distinctly understood that the invention is not limited thereto but may be otherwise variously embodied and practiced within the scope of the following claims.

## Claims

1. A stereoscopic indirect viewing device for a microscope having a left and a right viewing channel (18L, 18R), wherein the viewing device comprises:
a left display (20L) arranged in the left viewing channel (18L) and right display (20R) arranged in the right viewing channel (18R),
a left ocular (24L) in the left viewing channel (18L) and a right ocular (24R) in the right viewing channel (18R),
a left mount (32L) and a right mount (32R), wherein the left viewing channel (18L) is mounted on the left mount (32L) and the right viewing channel (18R) is mounted on the right mount (32R),
wherein device comprises at least one of
- a left beam deflector (22L) arranged between the left ocular (24L) and the left display (20L) in the left viewing channel (18L) and
- a right beam deflector (22R) arranged between the right ocular (24R) and the right display (20R) in the right viewing channel (18R),
**characterized in that** the left and the right mounts (32L, 32R) are mutually displaceable.

2. The device of claim 1 wherein one or both viewing channels comprises or comprise a first section (42) and a second section (44), with the first section (42) located between the ocular (24L, 24R) and the beam deflector (22L, 22R) and the second section (44) located between the beam deflector (22L, 22R) and the display (20L, 20R),
wherein an optical axis (46) of the first section (42) is non-parallel to an optical axis (48) of the second section.

3. The device of any of the preceding claims comprising the left beam deflector (22L) arranged between the left ocular (24L) and the left display (20L) in the left viewing channel (18L) and the right beam deflector (22R) arranged between the right ocular (24R) and the right display (20R) in the right viewing channel (18R).

4. The device of claim 3 wherein, when defining a left vector (48L) and a right vector (48R) as
- the left vector (48L) extends along the optical axis (46) in the second section (44) of left viewing channel (18L) from the left beam deflector (22L) towards the left display (20L) and
- the right vector (48R) extends along the optical axis (46) in the second section (44) of right viewing channel (18R) from the right beam deflector (22R) towards the right display (20R),
then the left and the right vectors (48L, 48R) are non-parallel.

5. The device of claim 4 wherein an angle between the left and the right vectors (48L, 48R) is larger than 45°, in particular larger than 90°, in particular larger than 135°, in particular 180°.

6. The device of any of the claims 4 or 5 wherein the left and the right vectors (48L, 48R) are divergent.

7. The device of any of the claims 3 to 6 wherein the optical axis (46) of the first section (42) of the left channel is parallel to the optical axis (46) of the first section (42) of the right channel.

8. The device of any of the claims 3 to 7 wherein the optical axis (46) of the first section (42) of the left channel and the optical axis (46) of the first section (42) of the right channel are convergent.

9. The device of any of the preceding claims wherein the left and the right displays (20L, 20R) are non-coplanar.

10. The device of claim 9 wherein an angle between the displays (20L, 20R) is less than 90°, in particular less than 45°, in particular less than 10°.

11. The device of any of the preceding claims wherein, for each channel, a focal length (f) of the ocular (24L, 24R) is equal to an optical distance (L) between the ocular (24L, 24R) and the display (20L, 20R) of the viewing channel (18L, 18R).

12. The device of claim 8 wherein, for each channel, a focal length (f) of the ocular (24L, 24R) is larger than an optical distance (L) between the ocular (24L, 24R) and the display (20L, 20R) of the viewing channel (18L, 18R).

13. The device of the claims 8 and 12 wherein
given a vergence distance X = A / (2·tan(β/2)) with
- β being an angle between the between optical axis (46) of the first section (42) of the left viewing channel (18L) and the optical axis (46) of the first section (42) of the right viewing channel (18R) and
- A being a distance between centers of the oculars (24L, 24R) of the left and the right viewing channel (18L, 18R),
a focal length (f) of the oculars (24L, 24R) is such that a user sees an image on the displays (20L, 20R) clearly when her/his eyes have a focal length matching the vergence distance X,
and in particular wherein the vergence distance X is between 0.4 and 3 m.

14. The device of any of the preceding claims further comprising, in each viewing channel (18L, 18R), a corrective concave lens (54L, 54R) arranged between the beam deflector (22L, 22R) and the display (20L, 20R).

15. The device of claim 14 wherein the corrective concave lens (54L, 54R) is a plano-concave lens with a flat surface facing the display (20L, 20R).

16. The device of claim 15 wherein a distance between the flat surface and the display (20L, 20R) is less than 1 cm and/or wherein an area of the corrective concave lens (54L, 54R) is at least an area of the display (20L, 20R).

17. The device of any of the preceding claims wherein, in each viewing channel (18L, 18R), the ocular (24L, 24R) does not form an intermediate image.

18. The device of any of the preceding claims wherein, for each viewing channel (18L, 18R), the following condition is true: $D / 2 L > tan \left(15°\right) ,$ with
- L being an optical distance between the ocular (24L, 24R) and the display (20L, 20R) and
- D being a smallest diameter of the display (20L, 20R).

19. The device of any of the preceding claims comprising a linear guide rail (36) extending perpendicularly to a symmetry plane of and between the left and the right ocular (24L, 24R), wherein at least one of the mounts (32L, 32R) is mounted to the linear guide rail (36).

20. The device of any of the preceding claims wherein diameters of the entrance pupils of the oculars are at least 3 cm, in particular 5 cm.

21. The device of any of the preceding claims wherein a half-angle aperture (α) of a user's field-of-view is at least 15°.

22. The device of any of the preceding claims, wherein the device is not a head-mounted device.

23. The device of any of the preceding claims wherein the beam deflector(s) (22L, 22R) has/have a curved mirroring surface.

24. The device of any of the preceding claims wherein the at least one beam deflector(s) (22L, 22R) is a prism having at least one of a curved entry surface (58) and a curved exit surface (60).

25. The device of any of the preceding claims comprising a beam deflector (22L, 22R) in only one of the two viewing channels.

26. A stereo microscope comprising a viewing device of any of the preceding claims as well as
microscope optics (2, 4, 10L, 10R) having a left and a right microscope channel (6L, 6R),
a first camera (12L) arranged in a first one of the microscope channels (6L, 6R) and a second camera (12R) arranged in a second one of the microscope channels (6L, 6R),
first and second electronic signal transmission channels (14L, 14R) connecting the first camera to the left display (20L) and the second camera to the right display (20R).

## Patentansprüche

1. Eine stereoskopische, indirekte Betrachtungsvorrichtung für ein Mikroskop mit einem linken und einem rechten Betrachtungskanal (18L, 18R), wobei die Betrachtungsvorrichtung umfasst:
ein im linken Betrachtungskanal (18L) angeordnetes linkes Display (20L) und ein im rechten Betrachtungskanal (18R) angeordnetes rechtes Display (20R),
ein linkes Okular (24L) im linken Betrachtungskanal (18L) und ein rechtes Okular (24R) im rechten Betrachtungskanal (18R),
eine linke Halterung (32L) und eine rechte Halterung (32R), wobei der linke Betrachtungskanal (18L) an der linken Halterung (32L) und der rechte Betrachtungskanal (18R) an der rechten Halterung (32R) angebracht ist,
wobei die Vorrichtung mindestens einen von:
- einem linken Strahlablenker (22L), der zwischen dem linken Okular (24L) und dem linken Display (20L) im linken Betrachtungskanal (18L) angeordnet ist, und
- einem rechten Strahlablenker (22R), der zwischen dem rechten Okular (24R) und dem rechten Display (20R) im rechten Betrachtungskanal (18R) angeordnet ist,
**dadurch gekennzeichnet, dass** die linke und die rechte Halterung (32L, 32R) relativ zueinander verschiebbar sind.

2. Die Vorrichtung nach Anspruch 1, wobei einer oder beide Betrachtungskanäle einen ersten Abschnitt (42) und einen zweiten Abschnitt (44) umfasst oder umfassen, wobei der erste Abschnitt (42) zwischen dem Okular (24L, 24R) und dem Strahlablenker (22L, 22R) angeordnet ist und der zweite Abschnitt (44) zwischen dem Strahlablenker (22L, 22R) und dem Display (20L, 20R) angeordnet ist,
wobei eine optische Achse (46) des ersten Abschnitts (42) nichtparallel zu einer optischen Achse (48) des zweiten Abschnitts verläuft.

3. Die Vorrichtung nach einem der vorangehenden Ansprüche, umfassend den linken Strahlablenker (22L), der zwischen dem linken Okular (24L) und dem linken Display (20L) im linken Betrachtungskanal (18L) angeordnet ist, und den rechten Strahlablenker (22R), der zwischen dem rechten Okular (24R) und dem rechten Display (20R) im rechten Betrachtungskanal (18R) angeordnet ist.

4. Die Vorrichtung nach Anspruch 3, wobei, wenn ein linker Vektor (48L) und ein rechter Vektor (48R) wie folgt definiert sind:
- der linke Vektor (48L) entlang der optischen Achse (46) im zweiten Abschnitt (44) des linken Betrachtungskanals (18L) vom linken Strahlablenker (22L) in Richtung des linken Displays (20L) erstreckt und
- der rechte Vektor (48R) entlang der optischen Achse (46) im zweiten Abschnitt (44) des rechten Betrachtungskanals (18R) vom rechten Strahlablenker (22R) in Richtung des rechten Displays (20R) erstreckt,
der linke und der rechte Vektor (48L, 48R) nichtparallel sind.

5. Die Vorrichtung nach Anspruch 4, wobei ein Winkel zwischen dem linken und dem rechten Vektor (48L, 48R) grösser als 45°, insbesondere grösser als 90°, insbesondere grösser als 135°, insbesondere 180° ist.

6. Die Vorrichtung nach einem der Ansprüche 4 oder 5, wobei der linke und der rechte Vektor (48L, 48R) divergent sind.

7. Die Vorrichtung nach einem der Ansprüche 3 bis 6, wobei die optische Achse (46) des ersten Abschnitts (42) des linken Kanals parallel zur optischen Achse (46) des ersten Abschnitts (42) des rechten Kanals verläuft.

8. Die Vorrichtung nach einem der Ansprüche 3 bis [ ] 6, wobei die optische Achse (46) des ersten Abschnitts (42) des linken Kanals und die optische Achse (46) des ersten Abschnitts (42) des rechten Kanals konvergent sind.

9. Die Vorrichtung nach einem der vorangehenden Ansprüche, wobei das linke und das rechte Display (20L, 20R) nicht koplanar sind.

10. Vorrichtung nach Anspruch 9, wobei ein Winkel zwischen den Displays (20L, 20R) kleiner als 90°, insbesondere kleiner als 45°, insbesondere kleiner als 10° ist.

11. Die Vorrichtung nach einem der vorangehenden Ansprüche, wobei für jeden Kanal eine Brennweite (f) des Okulars (24L, 24R) gleich einem optischen Abstand (L) zwischen dem Okular (24L, 24R) und dem Display (20L, 20R) des Betrachtungskanals (18L, 18R) ist.

12. Die Vorrichtung nach Anspruch 8, wobei für jeden Kanal eine Brennweite (f) des Okulars (24L, 24R) grösser ist als ein optischer Abstand (L) zwischen dem Okular (24L, 24R) und dem Display (20L, 20R) des Betrachtungskanals (18L, 18R).

13. Die Vorrichtung nach den Ansprüchen 8 und 12, wobei
bei einem gegebenen Vergenzabstand X = A / (2 tan(³/2)) mit
- ³ als ein Winkel zwischen der optischen Achse (46) des ersten Abschnitts (42) des linken Betrachtungskanals (18L) und der optischen Achse (46) des ersten Abschnitts (42) des rechten Betrachtungskanals (18R) und
- A als ein Abstand zwischen den Mittelpunkten der Okulare (24L, 24R) des linken und des rechten Betrachtungskanals (18L, 18R),
eine Brennweite (f) der Okulare (24L, 24R) derart ist, dass ein Benutzer ein Bild auf den Displays (20L, 20R) klar sieht, wenn seine/ihre Augen eine Brennweite haben, die dem Vergenzabstand X entspricht,
und insbesondere wobei der Vergenzabstand X zwischen 0,4 und 3 m liegt.

14. Die Vorrichtung nach einem der vorangehenden Ansprüche, weiter umfassend, in jedem Betrachtungskanal (18L, 18R), eine korrigierende Konkavlinse (54L, 54R) umfasst, die zwischen dem Strahlablenker (22L, 22R) und dem Display (20L, 20R) angeordnet ist.

15. Die Vorrichtung nach Anspruch 14, wobei die korrigierende Konkavlinse (54L, 54R) eine plankonkave Linse mit einer flachen Oberfläche ist, die dem Display (20L, 20R) zugewandt ist.

16. Die Vorrichtung nach Anspruch 15, wobei ein Abstand zwischen der flachen Oberfläche und dem Display (20L, 20R) weniger als 1 cm beträgt und/oder wobei eine Fläche der korrigierenden Konkavlinse (54L, 54R) mindestens eine Fläche des Displays (20L, 20R) ist.

17. Die Vorrichtung nach einem der vorangehenden Ansprüche, wobei in jedem Betrachtungskanal (18L, 18R) das Okular (24L, 24R) kein Zwischenbild erzeugt.

18. Die Vorrichtung nach einem der vorangehenden Ansprüche, wobei für jeden Betrachtungskanal (18L, 18R) die folgende Bedingung erfüllt ist: $D / 2 L > tan \left(15°\right) ,$ wobei
- L ein optischer Abstand zwischen dem Okular (24L, 24R) und dem Display (20L, 20R) ist und
- D ein kleinster Durchmesser des Displays (20L, 20R) ist.

19. Die Vorrichtung nach einem der vorangehenden Ansprüche, umfassend eine lineare Führungsschiene (36), die sich senkrecht zu einer Symmetrieebene des linken und des rechten Okulars (24L, 24R) und zwischen diesen erstreckt, wobei mindestens eine der Halterungen (32L, 32R) an der linearen Führungsschiene (36angebracht ist.

20. Die Vorrichtung nach einem der vorangehenden Ansprüche, wobei Durchmesser der Eintrittspupillen der Okulare mindestens 3 cm, insbesondere 5 cm, betragen.

21. Die Vorrichtung nach einem der vorangehenden Ansprüche, wobei ein Öffnungshalbwinkel (α) des Sichtfelds eines Benutzers mindestens 15° beträgt.

22. Die Vorrichtung nach einem der vorangehenden Ansprüche, wobei die Vorrichtung keine kopfgetragene Vorrichtung ist.

23. Die Vorrichtung nach einem der vorangehenden Ansprüche, wobei der/die Strahlablenker (22L, 22R) eine gekrümmte Spiegeloberfläche aufweist/aufweisen.

24. Die Vorrichtung nach einem der vorangehenden Ansprüche, wobei der mindestens eine Strahlablenker (22L, 22R) ein Prisma ist, das mindestens eine von einer gekrümmten Eintrittsfläche (58) und einer gekrümmten Austrittsfläche (60) aufweist.

25. Die Vorrichtung nach einem der vorangehenden Ansprüche, die einen Strahlablenker (22L, 22R) in nur einem der beiden Betrachtungskanäle umfasst.

26. Ein Stereomikroskop, umfassend eine Betrachtungsvorrichtung nach einem der vorangehenden Ansprüche sowie
eine Mikroskopoptik (2, 4, 10L, 10R) mit einem linken und einem rechten Mikroskopkanal (6L, 6R),
eine erste Kamera (12L), die in einem ersten der Mikroskopkanäle (6L, 6R) angeordnet ist, und eine zweite Kamera (12R), die in einem zweiten der Mikroskopkanäle (6L, 6R) angeordnet ist,
erste und zweite elektronische Signalübertragungskanäle (14L, 14R), welche die erste Kamera (12L) mit dem linken Display (20L) und die zweite Kamera (12R) mit dem rechten Display (20R) verbinden.

## Revendications

1. Un dispositif de visualisation indirecte stéréoscopique pour un microscope comportant un canal de visualisation gauche et un canal de visualisation droit (18L, 18R), dans lequel le dispositif de visualisation comprend :
un écran gauche (20L) agencé dans le canal de visualisation gauche (18L) et un écran droit (20R) agencé dans le canal de visualisation droit (18R),
un oculaire gauche (24L) dans le canal de visualisation gauche (18L) et un oculaire droit (24R) dans le canal de visualisation droit (18R),
une monture gauche (32L) et une monture droite (32R), dans lequel le canal de visualisation gauche (18L) est monté sur la monture gauche (32L) et le canal de visualisation droit (18R) est monté sur la monture droite (32R),
dans lequel le dispositif comprend au moins l'un parmi :
- un déflecteur de faisceau gauche (22L) agencé entre l'oculaire gauche (24L) et l'écran gauche (20L) dans le canal de visualisation gauche (18L) et
- un déflecteur de faisceau droit (22R) agencé entre l'oculaire droit (24R) et l'écran droit (20R) dans le canal de visualisation droit (18R),
**caractérisé en ce que** les montures gauche et droite (32L, 32R) sont mutuellement déplaçables.

2. Le dispositif selon la revendication 1, dans lequel un canal de visualisation ou les deux comprend ou comprennent une première section (42) et une deuxième section (44), la première section (42) étant située entre l'oculaire (24L, 24R) et le déflecteur de faisceau (22L, 22R) et la deuxième section (44) étant située entre le déflecteur de faisceau (22L, 22R) et l'écran (20L, 20R),
dans lequel un axe optique (46) de la première section (42) est non parallèle à un axe optique (48) de la deuxième section.

3. Le dispositif selon l'une quelconque des revendications précédentes, comprenant le déflecteur de faisceau gauche (22L) agencé entre l'oculaire gauche (24L) et l'écran gauche (20L) dans le canal de visualisation gauche (18L) et le déflecteur de faisceau droit (22R) agencé entre l'oculaire droit (24R) et l'écran droit (20R) dans le canal de visualisation droit (18R).

4. Le dispositif selon la revendication 3, dans lequel, lors de la définition d'un vecteur gauche (48L) et d'un vecteur droit (48R) comme suit :
- le vecteur gauche (48L) s'étend le long de l'axe optique (46) dans la deuxième section (44) du canal de visualisation gauche (18L) depuis le déflecteur de faisceau gauche (22L) vers l'écran gauche (20L) et
- le vecteur droit (48R) s'étend le long de l'axe optique (46) dans la deuxième section (44) du canal de visualisation droit (18R) depuis le déflecteur de faisceau droit (22R) vers l'écran droit (20R),
les vecteurs gauche et droit (48L, 48R) sont non parallèles.

5. Le dispositif selon la revendication 4, dans lequel un angle entre les vecteurs gauche et droit (48L, 48R) est supérieur à 45°, en particulier supérieur à 90°, en particulier supérieur à 135°, en particulier de 180°.

6. Le dispositif selon l'une quelconque des revendications 4 ou 5, dans lequel les vecteurs gauche et droit (48L, 48R) sont divergents.

7. Le dispositif selon l'une quelconque des revendications 3 à 6, dans lequel l'axe optique (46) de la première section (42) du canal gauche est parallèle à l'axe optique (46) de la première section (42) du canal droit.

8. Le dispositif selon l'une quelconque des revendications 3 à 6, dans lequel l'axe optique (46) de la première section (42) du canal gauche et l'axe optique (46) de la première section (42) du canal droit sont convergents.

9. Le dispositif selon l'une quelconque des revendications précédentes, dans lequel les écrans gauche et droit (20L, 20R) sont non coplanaires.

10. Le dispositif selon la revendication 9, dans lequel un angle entre les écrans (20L, 20R) est inférieur à 90°, en particulier inférieur à 45°, en particulier inférieur à 10°.

11. Le dispositif selon l'une quelconque des revendications précédentes, dans lequel, pour chaque canal, une distance focale (f) de l'oculaire (24L, 24R) est égale à une distance optique (L) entre l'oculaire (24L, 24R) et l'écran (20L, 20R) du canal de visualisation (18L, 18R).

12. Le dispositif selon la revendication 8, dans lequel, pour chaque canal, une distance focale (f) de l'oculaire (24L, 24R) est supérieure à une distance optique (L) entre l'oculaire (24L, 24R) et l'écran (20L, 20R) du canal de visualisation (18L, 18R).

13. Le dispositif selon les revendications 8 et 12, dans lequel,
une distance de vergence X = A / (2 tan(³/2)) étant donnée, avec
- β étant un angle entre l'axe optique (46) de la première section (42) du canal de visualisation gauche (18L) et l'axe optique (46) de la première section (42) du canal de visualisation droit (18R) et
- A étant une distance entre les centres des oculaires (24L, 24R) du canal de visualisation gauche et du canal de visualisation droit (18L, 18R),
une distance focale (f) des oculaires (24L, 24R) est telle qu'un utilisateur voit nettement une image sur les écrans (20L, 20R) lorsque ses yeux ont une distance focale correspondant à la distance de vergence X,
et en particulier dans lequel la distance de vergence X est comprise entre 0,4 et 3 m.

14. Le dispositif selon l'une quelconque des revendications précédentes, comprenant en outre, dans chaque canal de visualisation (18L, 18R), une lentille concave de correction (54L, 54R) agencée entre le déflecteur de faisceau (22L, 22R) et l'écran (20L, 20R).

15. Le dispositif selon la revendication 14, dans lequel la lentille concave de correction (54L, 54R) est une lentille plan-concave avec une surface plane faisant face à l'écran (20L, 20R).

16. Le dispositif selon la revendication 15, dans lequel une distance entre la surface plane et l'écran (20L, 20R) est inférieure à 1 cm et/ou dans lequel une superficie de la lentille concave de correction (54L, 54R) est au moins égale à une superficie de l'écran (20L, 20R).

17. Le dispositif selon l'une quelconque des revendications précédentes, dans lequel, dans chaque canal de visualisation (18L, 18R), l'oculaire (24L, 24R) ne forme pas d'image intermédiaire.

18. Le dispositif selon l'une quelconque des revendications précédentes, dans lequel, pour chaque canal de visualisation (18L, 18R), la condition suivante est remplie : $D / 2 L > tan \left(15°\right) ,$ avec
- **L** étant une distance optique entre l'oculaire (24L, 24R) et l'écran (20L, 20R) et
- **D** étant un plus petit diamètre de l'écran (20L, 20R).

19. Le dispositif selon l'une quelconque des revendications précédentes, comprenant un rail de guidage linéaire (36) s'étendant perpendiculairement à un plan de symétrie des oculaires gauche et droit (24L, 24R) et entre ceux-ci, dans lequel au moins l'une des montures (32L, 32R) est montée sur le rail de guidage linéaire (36).

20. Le dispositif selon l'une quelconque des revendications précédentes, dans lequel des diamètres des pupilles d'entrée des oculaires sont d'au moins 3 cm, en particulier de 5 cm.

21. Le dispositif selon l'une quelconque des revendications précédentes, dans lequel un demi-angle d'ouverture (α) d'un champ de vision d'un utilisateur est d'au moins 15°.

22. Le dispositif selon l'une quelconque des revendications précédentes, dans lequel le dispositif n'est pas un dispositif monté sur la tête.

23. Le dispositif selon l'une quelconque des revendications précédentes, dans lequel le ou les déflecteurs de faisceau (22L, 22R) présente ou présentent une surface de miroir incurvée.

24. Le dispositif selon l'une quelconque des revendications précédentes, dans lequel l'au moins un déflecteur de faisceau (22L, 22R) est un prisme présentant au moins l'une parmi une surface d'entrée incurvée (58) et une surface de sortie incurvée (60).

25. Le dispositif selon l'une quelconque des revendications précédentes, comprenant un déflecteur de faisceau (22L, 22R) dans un seul des deux canaux de visualisation.

26. Un stéréomicroscope comprenant un dispositif de visualisation selon l'une quelconque des revendications précédentes ainsi que
une optique de microscope (2, 4, 10L, 10R) présentant un canal de microscope gauche et un canal de microscope droit (6L, 6R),
une première caméra (12L) agencée dans un premier des canaux de microscope (6L, 6R) et une seconde caméra (12R) agencée dans un second des canaux de microscope (6L, 6R),
des premier et second canaux de transmission de signaux électroniques (14L, 14R) reliant la première caméra à l'écran gauche (20L) et la seconde caméra à l'écran droit (20R).
